# EUROPÄISCHE PATENTSCHRIFT

(11) **EP 2 026 364 B1**
(45) Veröffentlichungstag und Bekanntmachung des Hinweises auf die Patenterteilung: **20.11.2013**
(21) Anmeldenummer: 08405193.7
(22) Anmeldetag: 08.08.2008
(51) Int. Cl.: H01H 9/02, H02G 3/18

(54) **Schnappverschluss**
Latch
Fermeture à déclic

(30) Priorität: 15.08.2007 CH 12872007
(43) Veröffentlichungstag der Anmeldung: 18.02.2009
(73) Patentinhaber: Fr. Sauter AG, 4016 Basel (CH)
(72) Erfinder: Niedbalski, Bruno, 4057 Basel (CH); Müller, Roman, 4153 Reinach (CH)
(74) Vertreter: Bohest AG

(56) Entgegenhaltungen:
- DE-A1- 2 161 891
- DE-U- 1 940 965
- DE-U1- 29 520 460
- GB-A- 2 183 107
- US-A- 2 842 281

## Beschreibung

### Technisches Gebiet

Die Erfindung betrifft einen Schnappverschluss gemäss dem Oberbegriff des unabhängigen Patentanspruchs 1 sowie eine Befestigungsvorrichtung, eine Schalteinheit und ein Raumgerät mit jeweils mindestens einem solchen Schnappverschluss.

Solche Schnappverschlüsse mit einem vorspannbaren Schieber, der eine Befestigungskante aufweist, die hinter einem Gegenstück angeordnet ist, wenn der Schnappverschluss an einem das Gegenstück umfassenden Teil befestigt ist, werden beispielsweise zur Befestigung von Schalteinheiten und Raumgeräten an einer Wand eingesetzt.

### Stand der Technik

Schalteinheiten werden heute im Allgemeinen dazu verwendet aus einer vordefinierten Anzahl von Funktionen eine Funktion auszuwählen und diese auszulösen. Insbesondere für die Bedienung und Steuerung elektrisch betriebener Geräte werden heute Schalteinheiten verschiedenster Ausgestaltung eingesetzt. Zur einfacheren Handhabung werden häufig verschiedene Funktionen eines oder mehrerer Geräte über eine einzige Schalteinheit ausgelöst. Beispielsweise werden heute zur Steuerung und Regelung von Räumen Raumgeräte eingesetzt, mit denen sich neben der Regelung der Raumtemperatur auch noch andere Raumfunktionen ausführen lassen, z.B. das Ein-/Ausschalten des Lichts, die Regelung der Raumlüftung, das Betätigen von Jalousien etc.. Zur Steuerung und Regelung von Räumen werden auch gesonderte Schalteinheiten eingesetzt, die sich von Raumgeräten darin unterscheiden, dass sich mit ihnen die Raumtemperatur nicht regeln lässt. Solche Raumgeräte beziehungsweise Schalteinheiten sind im Betrieb typischerweise so in einer oder an einer Wand montiert, dass sie von einem Benutzer vom Raum aus betätigbar sind. Bei einer Unterputzmontage einer solchen Schalteinheit bzw. eines solchen Raumgeräts wird typischerweise ein Loch in die Wand gebohrt und eine Wanddose in das Loch in der Wand eingesetzt und fixiert. Anschliessend wird die Schalteinheit bzw. das Raumgerät an die Wanddose geschraubt. Je nach Konstruktion der Schalteinheit bzw. des Raumgeräts wird hierbei zuerst eine Montageeinheit an die Wanddose geschraubt und anschliessend eine Bedieneinheit auf die Montageeinheit geschraubt oder aufgesetzt. Dabei gilt es zu beachten, dass je nach Ausgestaltung der in der Wand eingesetzten Wanddose und je nach Dicke der aufgebrachten Farbschichten bzw. Tapeten ein mehr oder weniger grosser Höhenunterschied zwischen der Bedieneinheit und der Wand kompensiert werden sollte, damit die Bedieneinheit auf der Wand aufliegt.

Herkömmliche Schalteinheiten bzw. Raumgeräte verfügen teilweise über einen Verschluss, welcher für die Befestigung der Bedieneinheit an der Montageeinheit besorgt ist und über welchen ein solcher Höhenunterschied ausgleichbar ist. Beispielsweise werden Blattfedern als Verschluss eingesetzt, die bei der Montage in Öffnungen der Montageeinheit eingeführt werden. Damit kann zwar ein Höhenunterschied zwischen der Bedieneinheit und der Wand kompensiert werden, jedoch kann die Montage bzw. die Demontage, insbesondere an schlecht zugänglichen Orten oder unter schwierigen Umständen, umständlich sein. Z. B. kann es schwierig sein, alle Blattfedern bei der Montage in die entsprechenden Öffnungen einzufädeln, oder bei der Demontage können eine oder mehrere der Blattfedern von der Bedieneinheit abreissen. Auch kann die Anbringung der Blattfedern an der Bedieneinheit bei deren Herstellung aufwändig sein, da die Blattfedern gesondert an der Bedieneinheit befestigt werden müssen. Dies kann z. B. mittels Nieten oder Schrauben geschehen.

Ein Beispiel von Schalteinheit mit Verschluss wird in DE-U-29520460 offenbart.

Aufgabe der nachfolgenden Erfindung ist es daher, einen Verschluss zur einfachen Montage bzw. Demontage einer Schalteinheit bzw. eines Raumgeräts an einer Wand vorzuschlagen, der es ermöglicht, einen Höhenunterschied zu kompensieren und der einfach herstellbar ist.

### Darstellung der Erfindung

Die Aufgabe wird erfindungsgemäss durch einen Schnappverschluss gelöst, wie er durch die Merkmale des unabhängigen Patentanspruchs 1 charakterisiert ist. Vorteilhafte Ausgestaltungen des erfindungsgemässen Schnappverschlusses ergeben sich aus den Merkmalen der abhängigen Patentansprüche.

Insbesondere umfasst der erfindungsgemässe Schnappverschluss einen vorspannbaren Schieber, der eine Befestigungskante aufweist, die hinter einem Gegenstück angeordnet ist, wenn der Schnappverschluss an einem das Gegenstück umfassenden Teil befestigt ist. Durch diese Anordnung der Befestigungskante hinter dem Gegenstück kann der Schnappverschluss und mit ihm verbundene Teile am Teil gehalten und befestigt sein. Der Schieber ist dabei so ausgestaltet, dass der Schnappverschluss über die Befestigungskante in Richtung des Gegenstücks ziehbar ist, wenn der Schnappverschluss an dem das Gegenstück umfassenden Teil befestigt ist. Mittels dieser Befestigungskante kann somit gewährleistet werden, dass der Schnappverschluss selbst nach der Befestigung in Richtung des Gegenstücks gezogen wird und damit eine Kompensation eines Höhenunterschiedes zuverlässig erfolgt. Ebenfalls ermöglicht dies, im Gegensatz zu einer riegelartigen Befestigungskante, dass die Demontage einer mit dem erfindungsgemässen Schnappverschluss ausgerüsteten Schalteinheiten oder Raumgeräte einfach vonstatten gehen kann. Der Einsatz eines vorspannbaren Schiebers ermöglicht zudem, dass mit dem erfindungsgemässen Schnappverschluss ausgerüstete Schalteinheiten oder Raumgeräte einfach zu montieren sind, da der vorspannbare Schieber eine einfache Positionierung der jeweils zu montierenden Teile ermöglicht.

Vorzugsweise umfasst der Schieber eine im Wesentlichen dreieckförmige Spitze und ein Schenkel der dreieckförmigen Spitze ist als eine Vorspannkante sowie ein weiterer Schenkel der dreieckförmigen Spitze ist als die Befestigungskante ausgebildet. Die Vorspannkante des erfindungsgemässen Schiebers ist für die Vorspannung des Schiebers vor der Befestigung des Schnappverschlusses an dem das Gegenstück umfassenden Teil zuständig. Die Befestigungskante ist wie vorstehend beschrieben für die Befestigung und für die Höhenkompensation des Schnappverschlusses an dem das Gegenstück umfassenden Teil verantwortlich. Damit ist gewährleistet, dass sowohl die Höhenkompensation, als auch mit dem Schnappverschluss ausgerüstete Schalteinheiten oder Raumgeräte einfach zu montieren bzw. zu demontieren sind.

Vorzugsweise umfasst der Schnappverschluss eine Feder, mittels welcher der Schieber vorspannbar ist. Die Feder ermöglicht sowohl das Vorspannen des Schiebers, als auch das Anordnen der Befestigungskante hinter dem Gegenstück sowie das gleichzeitige Ziehen des Schnappverschlusses in Richtung des Gegenstücks über die Befestigungskante, so dass bei befestigtem erfindungsgemässen Schnappverschlusses ein Höhenunterschied kompensiert werden kann.

Vorzugsweise umfasst der Schnappverschluss einen zweiten Schieber und einen Rahmen, wobei der Schieber, der zweite Schieber und die Feder so im Rahmen angeordnet sind, dass mittels der Feder der Schieber und der zweite Schieber in entgegengesetzter Richtung auseinander bewegbar sind. Die Anordnung der Feder, des Schiebers und des zweiten Schiebers in einem Rahmen ermöglicht die einfache Herstellung eines erfindungsgemässen Schnappverschlusses, wobei die Feder sowohl den Schieber als auch den zweiten Schieber in entgegengesetzter Richtung vorspannt.

Vorzugsweise sind der Schieber und der zweite Schieber so angeordnet, dass die dreieckförmige Spitze des Schiebers und die dreieckförmige Spitze des zweiten Schiebers in entgegengesetzter Richtung aus dem Rahmen hinausragen. Somit kann gewährleistet werden, dass mit dem erfindungsgemässen Schnappverschluss ausgerüstete Schalteinheiten und Raumgeräte einfach zu montieren bzw. zu demontieren sind, da anlässlich der Montage die dreieckförmige Spitze des Schiebers und die dreieckförmige Spitze des zweiten Schiebers eine einfache Positionierung der jeweils zu montierenden Teile gewährleisten kann.

Vorzugsweise umfassen der Schieber und der zweite Schieber jeweils mindestens ein Anschlagelement, die so angeordnet sind, dass der Schieber und der zweite Schieber gegen ein Herausbewegen aus dem Rahmen gesichert sind. Das Anbringen von Anschlagelementen am Schieber und am zweiten Schieber kann sicher stellen, dass der Schieber und der zweite Schieber auch unter dem Druck der Feder nicht aus dem Rahmen herausbewegt werden. Somit ist gewährleistet, dass der erfindungsgemässe Schnappverschluss sowohl einfach montiert bzw. demontiert werden kann, als auch dauerhaft bzw. für eine Vielzahl von Befestigungszyklen ausgelegt ist, da der Schieber und der zweite Schieber im Rahmen sauber geführt sind und diesen dank der Anschlagelemente nicht verlassen können. Die Anschlagelemente besitzen auf der einen Seite einen Anschlag und auf der anderen Seite einen stetig abnehmenden, langgezogenen Teilbereich, so dass während der Herstellung des Schnappverschlusses zuerst die Feder in den Rahmen eingebracht werden und anschliessend der Schieber und der zweite Schieber mit der Gegenseite der dreieckförmigen Spitze voraus in den Rahmen hineingedrückt und sicher im Rahmen verankert werden können. Gleichzeitig wird dabei die Feder leicht komprimiert und der Schieber sowie der zweite Schieber damit vorgespannt.

Ein weiterer Aspekt der Erfindung betrifft eine Befestigungsvorrichtung, die eine erste Montageeinheit mit mindestens einem erfindungsgemässen und vorstehend beschriebenen Schnappverschluss und eine zweite Montageeinheit mit mindestens einem das Gegenstück umfassenden Teil aufweist, wobei der Schnappverschluss so an der ersten Montageeinheit und das das Gegenstück umfassende Teil so an der zweiten Montageeinheit angeordnet sind, dass die erste Montageeinheit in mehreren Stellungen an der zweiten Montageeinheit befestigbar ist. Mittels der erfindungsgemässen Befestigungsvorrichtung können Schalteinheiten bzw. Raumgeräte einfach an einem vorgesehenen Ort montiert werden, wenn die erste Montageeinheit mindestens einen erfindungsgemässen und vorstehend beschriebenen Schnappverschluss umfasst und die zweite Montageeinheit das Gegenstück umfassende Teil aufweist. Damit kann die erste Montageeinheit in mehreren Stellungen an der zweiten Montageeinheit montiert werden.

Vorzugsweise umfasst die erste Montageeinheit zwei im Wesentlichen parallel zueinander angeordnete Schnappverschlüsse und die zweite Montageeinheit umfasst vier Teile mit jeweils einem Gegenstück, so dass die erste Montageeinheit in vier um etwa 90° zueinander gedrehten Stellungen an der ersten Montageeinheit befestigbar ist. Somit kann gewährleistet werden, dass die zweite Montageeinheit in einer beliebigen der möglichen Stellungen in einem entsprechend ausgestalteten Loch in einer Wand montiert werden kann, bevor die erste Montageeinheit an der zweiten Montageeinheit befestigt wird, ohne dass dabei die bevorzugte Stellung der ersten Montageeinheit bei der späteren Befestigung der ersten Montageeinheit an der zweiten Montageeinheit zu berücksichtigen ist.

Ein anderer weiterer Aspekt der Erfindung betrifft eine Schalteinheit mit einem erfindungsgemässen und vorstehend beschriebenen Schnappverschluss. Mittels dieses erfindungsgemässen Schnappverschlusses kann gewährleistet werden, dass die Schalteinheit einfach montiert bzw. demontiert werden kann und dass ein Höhenunterschied ausgeglichen werden kann.

Ein anderer weiterer Aspekt der Erfindung betrifft ein Raumgerät mit einem erfindungsgemässen und vorstehend beschriebenen Schnappverschluss. Mittels dieses erfindungsgemässen Schnappverschlusses kann wiederum gewährleistet werden, dass das Raumgerät einfach montiert bzw. demontiert werden kann und dass ein Höhenunterschied ausgeglichen werden kann

### Kurze Beschreibung der Abbildungen der Zeichnungen

Weitere vorteilhafte Ausgestaltungen der Erfindung ergeben sich aus der nachfolgenden Beschreibung von Ausführungsbeispielen der Erfindung mit Hilfe der schematischen Zeichnung.
Es zeigen:

Fig. 1 eine perspektivische Ansicht eines Ausführungsbeispiels einer erfindungsgemässen Befestigungsvorrichtung mit einer ersten und einer zweiten Montageeinheit,

Fig. 2 eine Seitenansicht der ersten Montageeinheit von Fig. 1 mit einem Schnappverschluss,

Fig. 3 eine Ansicht auf einen Schieber, einen zweiten Schieber und eine Feder des Schnappverschlusses von Fig. 2, und

Fig. 4 eine perspektivische Ansicht der zweiten Montageeinheit von Fig. 1. **Weg(e) zur Ausführung der Erfindung**

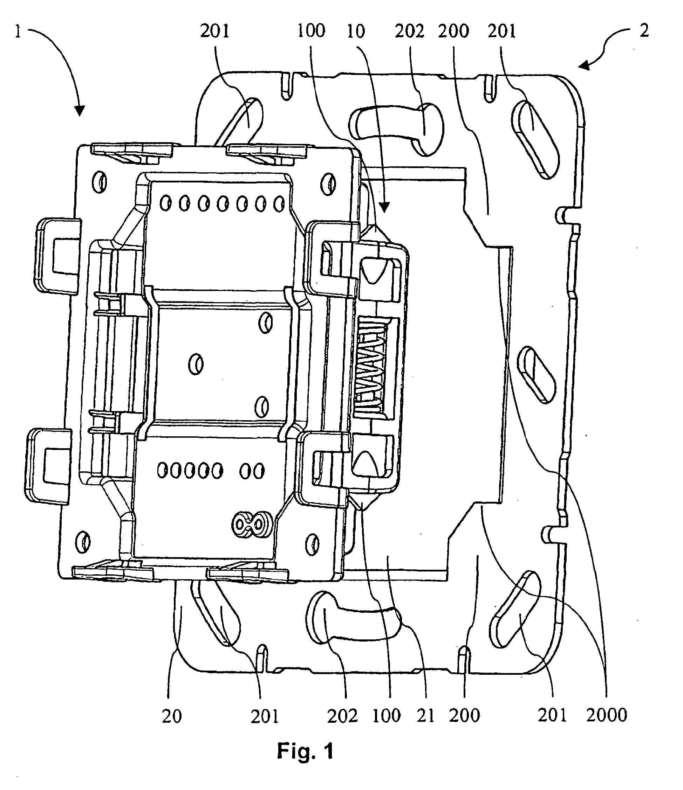

In Fig. 1 sind einige Elemente eines Ausführungsbeispiels einer Befestigungsvorrichtung gezeigt. Die Befestigungsvorrichtung weist eine erste Montageeinheit 1 und eine zweite Montageeinheit 2 auf. Die erste Montageeinheit 1 umfasst zwei Schnappverschlüsse 10, wobei nur einer in Fig. 1 ersichtlich ist. Der Schnappverschluss 10 umfasst einen Schieber und einen zweiten Schieber 100. Die zweite Montageeinheit 2 umfasst einen im Wesentlichen quadratischen Montagerahmen 20 mit einem ausgesparten Innenraum 21, wobei der im Wesentlichen quadratische Montagerahmen 20 an den Ecken vier Flansche 200 umfasst, die in den Innenraum 21 hineinragen. Jeder Flansch 200 besitzt zwei Kanten 2000, wobei jeweils eine Kante 2000 als Gegenstück zur Aufnahme eines der beiden Schieber 100 dient. Ebenfalls bilden die direkt benachbarte Kanten 2000 zweier benachbarter Flansche 200 ein das Gegenstück umfassendes Teil, das die Aufnahme eines Schnappverschlusses 10 ermöglicht. Der im Wesentlichen quadratische Montagerahmen 20 umfasst ebenfalls vier Befestigungslöcher 201, die jeweils in den Ecken des im Wesentlichen quadratischen Montagerahmens 20 angeordnet sind, und weitere Befestigungslöcher 202, die nicht in den Ecken angeordnet sind. Die Befestigungslöcher 201 und die weiteren Befestigungslöcher 202 dienen der Montage der zweiten Montageeinheit 2 z. B. an eine Wand.

Die erste Montageeinheit 1 wird durch einfaches Hineindrücken der ersten Montageeinheit 1 in den ausgesparten Innenraum 21 der zweiten Montageeinheit 2 an der zweiten Montageeinheit 2 befestigt, wobei die zwei Schnappverschlüsse 10 der ersten Montageeinheit 1 hinter die jeweils direkt benachbarten Kanten 2000 zweier benachbarter Flansche 200 der zweiten Montageeinheit 2 einschnappen und die erste Montageeinheit 1 so an der zweiten Montageeinheit 2 befestigen.

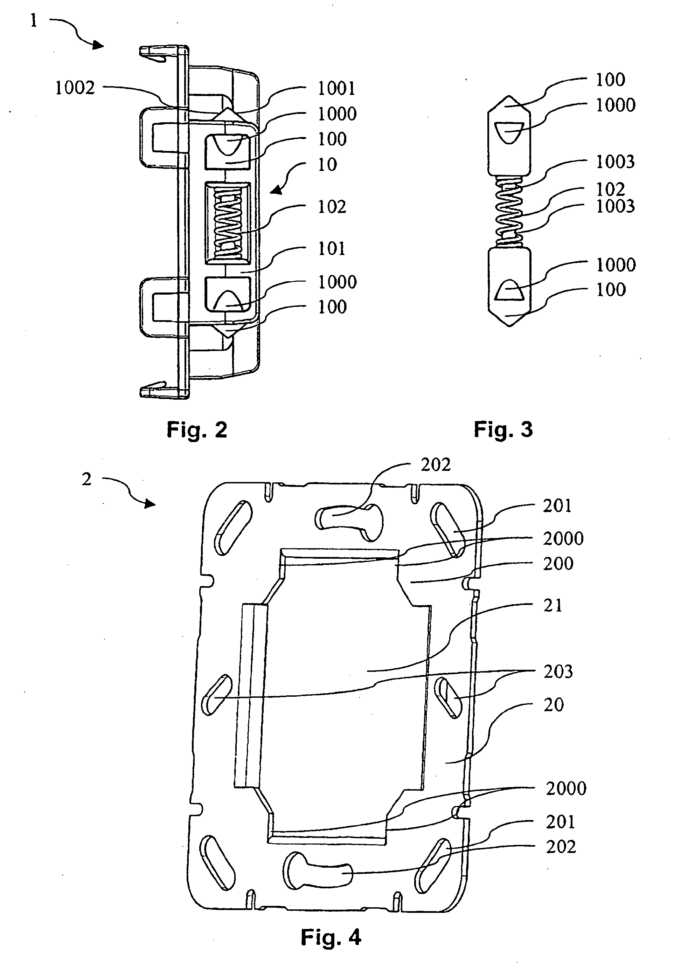

In der Fig. 2 ist der Aufbau des Schnappverschlusses 10 aus dem Ausführungsbeispiel von Fig. 1 ersichtlich. In einem Rahmen 101 sind der Schieber und der zweite Schieber 100, sowie eine Feder 102 angeordnet, welche den ersten Schieber und den zweiten Schieber 100 auseinanderbewegt. Die beiden Schieber 100 umfassen jeweils eine dreieckförmige Spitze, die jeweils eine Vorspannkante 1001 und eine Befestigungskante 1002 umfassen, und aus dem Rahmen 101 herausragen. Ebenfalls umfassen die beiden Schieber 100 jeweils ein Anschlagelement 1000, welches verhindert, dass der Schieber und der zweite Schieber 100 aus dem Rahmen 101 hinaus bewegt werden.

Der Schieber und der zweite Schieber 100 sind so angeordnet, dass bei der Montage der ersten Montageeinheit 1 an der zweiten Montageeinheit 2 die jeweilige Vorspannkante 1001 auf jeweils eine entsprechende Kante 2000 (siehe Fig. 1) der zweiten Montageeinheit 2 drückt. Wird nun genügend Druck auf die erste Montageeinheit 1 ausgeübt, so werden der Schieber und der zweite Schieber 100 entgegen der Federkraft der Feder 102 in den Rahmen 101 bewegt. Der Schieber und der zweite Schieber 100 können dabei soweit in den Rahmen 101 hineinbewegt werden, dass die erste Montageeinheit 1 über die Spitze des Schiebers und des zweiten Schiebers 100 hinaus über die Kante 2000 (siehe Fig. 1) der zweiten Montageeinheit 2 vorbeibewegt werden können. Ab diesem Punkt drückt die Feder 102 den Schieber und den zweiten Schieber 100 wieder aus dem Rahmen 101. Die jeweilige Befestigungskante 1002 des Schiebers und des zweiten Schiebers 100 sind nun dafür verantwortlich, dass die erste Montageeinheit 1 an die zweite Montageeinheit 2 gezogen wird und so einen eventuell vorliegenden Höhenunterschied zuverlässig kompensieren kann.

In der Fig. 3 ist der Aufbau der Elemente zu sehen, die im Inneren des Rahmens 101 (siehe Fig. 2) des Ausführungsbeispiels von Fig. 1 zu finden sind. Diese umfassen den Schieber und den zweiten Schieber 100, sowie die Feder 102. Die beiden Schieber 100 umfassen jeweils eine Nocke 1003, die jeweils von der Feder 102 umfasst werden und somit eine sichere Vorspannung des Schiebers und des zweiten Schiebers 100 gewährleisten können. Ebenfalls sind auf dem Schieber und dem zweiten Schieber 100 die jeweiligen Anschlagelemente 1000 ersichtlich, welche verhindern, dass der Schieber und der zweite Schieber 100 aus dem Rahmen 101 (siehe Fig. 2) hinaus bewegt werden.

In der Fig. 4 ist die zweite Montageeinheit des Ausführungsbeispiels der Fig. 1 ersichtlich, insbesondere den im Wesentlichen quadratischen Montagerahmen 20 mit dem ausgesparten Innenraum 21, wobei der im Wesentlichen quadratische Montagerahmen 20 an den Ecken die vier Flansche 200 umfasst, die in den Innenraum 21 hineinragen. Jeder Flansch 200 umfasst die zwei Kanten 2000, wobei jeweils direkt benachbarte Kanten 2000 zweier direkt benachbarter Flansche 200 das das Gegenstück umfassende Teil bilden, das die Aufnahme eines Schnappverschlusses 10 (siehe Fig. 1) ermöglicht. Der im Wesentlichen quadratische Montagerahmen 20 umfasst ebenfalls die vier Befestigungslöcher 201, die jeweils in den Ecken des im Wesentlichen quadratischen Montagerahmens 20 angeordnet sind, und weitere Befestigungslöcher 202, 203, die nicht in den Ecken angeordnet sind. Die Befestigungslöcher 201 und die weiteren Befestigungslöcher 202, 203 dienen der Montage der zweiten Montageeinheit 2 z. B. an eine Wand.

Zu den vorbeschriebenen erfindungsgemässen Schnappverschlüssen bzw. Befestigungsvorrichtungen sind weitere konstruktive Variationen realisierbar. Hier ausdrücklich erwähnt sei noch:
- Anstelle der im Wesentlichen quadratischen Montageeinheiten können auch rechteckige, mehreckige, runde oder frei geformte Montageeinheiten mit mindestens einer erfindungsgemässen Befestigungsvorrichtung ausgerüstet sein.

## Patentansprüche

1. Schnappverschluss (10) mit einem vorspannbaren Schieber (100), der eine Befestigungskante (1002) aufweist, die hinter einem Gegenstück (2000) angeordnet ist, wenn der Schnappverschluss (10) an einem das Gegenstück (2000) umfassenden Teil befestigt ist, **dadurch gekennzeichnet, dass** der Schieber (100) so ausgestaltet ist, dass der Schnappverschluss (10) über die Befestigungskante (1002) in Richtung des Gegenstücks (2000) ziehbar ist, wenn der Schnappverschluss (10) an dem das Gegenstück (2000) umfassenden Teil befestigt ist.

2. Schnappverschluss nach Anspruch 1, wobei der Schieber (100) eine im Wesentlichen dreieckförmige Spitze umfasst und ein Schenkel der dreieckförmigen Spitze als eine Vorspannkante (1001) sowie ein weiterer Schenkel der dreieckförmigen Spitze als die Befestigungskante (1002) ausgebildet ist.

3. Schnappverschluss nach Anspruch 1 oder 2, der eine Feder (102) umfasst, mittels welcher der Schieber (100) vorspannbar ist.

4. Schnappverschluss nach Anspruch 3, der einen zweiten Schieber (100) und einen Rahmen (101) umfasst, wobei der Schieber, der zweite Schieber (100) und die Feder (102) so im Rahmen (101) angeordnet sind, dass mittels der Feder (102) der Schieber und der zweite Schieber (100) in entgegengesetzter Richtung auseinander bewegbar sind.

5. Schnappverschluss nach Anspruch 4, wobei der Schieber und der zweite Schieber (100) so angeordnet sind, dass die dreieckförmige Spitze des Schiebers und die dreieckförmige Spitze des zweiten Schiebers (100) in entgegengesetzter Richtung aus dem Rahmen (101) hinausragen.

6. Schnappverschluss nach Anspruch 4 oder 5, wobei der Schieber und der zweite Schieber (100) jeweils mindestens ein Anschlagelement (1000) umfassen, die so angeordnet sind, dass der Schieber und der zweite Schieber (100) gegen ein Herausbewegen aus dem Rahmen (101) gesichert sind.

7. Befestigungsvorrichtung, die eine erste Montageeinheit (1) mit mindestens einem Schnappverschluss (10) nach einem der Ansprüche 1 bis 6 und eine zweite Montageeinheit (2) mit mindestens einem das Gegenstück (2000) umfassenden Teil aufweist, wobei der Schnappverschluss (10) so an der ersten Montageeinheit (1) und das das Gegenstück umfassende Teil so an der zweiten Montageeinheit (2) angeordnet sind, dass die erste Montageeinheit (1) in mehreren Stellungen an der zweiten Montageeinheit (2) befestigbar ist.

8. Befestigungsvorrichtung nach Anspruch 7, wobei die erste Montageeinheit (1) zwei im Wesentlichen parallel zueinander angeordnete Schnappverschlüsse (10) umfasst und die zweite Montageeinheit (2) vier Teile mit jeweils einem Gegenstück (2000) umfasst, so dass die erste Montageeinheit (1) in vier um etwa 90° zueinander gedrehten Stellungen an der zweiten Montageeinheit (2) befestigbar ist.

9. Schalteinheit mit einem Schnappverschluss (10) nach einem der Ansprüche 1 bis 6.

10. Raumgerät mit einem Schnappverschluss (10) nach einem der Ansprüche 1 bis 6.

## Claims

1. Snap lock (10) having a pretensionable slider (100) comprising a fixing edge (1002) which is arranged behind a counterpart (2000) when the snap lock (10) is attached to a part comprising the counterpart (2000), **characterized in that** the slider (100) is configured such that the snap lock (10) is pullable over the fixing edge (1002) in the direction of the counterpart (2000) when the snap lock (10) is attached to the part comprising the counterpart (2000).

2. Snap lock according to claim 1, wherein the slider (100) comprises a substantially triangularly shaped tip and one leg of the triangularly shaped tip is formed as a pretensioning edge (1001) and a further leg of the triangularly shaped tip is formed as the fixing edge (1002).

3. Snap lock according to claim 1 or 2, comprising a spring (102), by means of which the slider (100) is pretensionable.

4. Snap lock according to claim 3, comprising a second slider (100) and a frame (101), wherein the slider, the second slider (100) and the spring (102) are arranged in the frame (101) such that the slider and the second slider (100) are movable away from each other in opposite directions by means of the spring (102).

5. Snap lock according to claim 4, wherein the slider and the second slider (100) are arranged such that the triangularly shaped tip of the slider and the triangularly shaped tip of the second slider (100) project out of the frame (101) in opposite directions.

6. Snap lock according to claim 4 or 5, wherein the slider and the second slider (100) comprise each at least one abutment element (1000) being arranged such that the slider and the second slider (100) are secured against a moving out of the frame (101).

7. Fastening device, which comprises a first mounting unit (1) having at least one snap lock (10) according to any one of claims 1 to 6 and a second mounting unit (2) having at least one part comprising the counterpart (2000), wherein the snap lock (10) is arranged at the first mounting unit (1) and the part comprising the counterpart is arranged at the second mounting unit (2) such that the first mounting unit (1) is attachable to the second mounting unit (2) in several positions.

8. Fastening device according to claim 7, wherein the first mounting unit (1) comprises two snap locks (10) which are arranged substantially parallel with respect to each other, and the second mounting unit (2) comprises four parts having each a counterpart (2000), such that the first mounting unit (1) is attachable to the second mounting unit (1) in four positions rotated with respect to each other by about 90°.

9. Switch unit with a snap lock (10) according to any one of claims 1 to 6.

10. Room unit with a snap lock (10) according to any one of claims 1 to 6.

## Revendications

1. Fermeture à encliquetage (10) comprenant un curseur (100) susceptible d'être précontraint, qui comporte une arête de fixation (1002) qui est agencée derrière une pièce antagoniste (200) quand la fermeture à encliquetage (10) est fixée sur une partie qui englobe la pièce antagoniste (2000), **caractérisée en ce que** le curseur (100) est conçu de telle façon que la fermeture à encliquetage (10) peut être tirée par-dessus l'arête de fixation (1002) en direction de la pièce antagoniste (2000) quand la fermeture à encliquetage (10) est fixée sur la partie qui englobe la pièce antagoniste (2000).

2. Fermeture à encliquetage selon la revendication 1, dans laquelle le curseur (100) inclut une pointe sensiblement en forme triangulaire, et un côté de la pointe en forme triangulaire est réalisée comme une arête de précontrainte (1001), et un autre côté de la pointe en forme triangulaire est réalisée comme l'arête de fixation (1002).

3. Fermeture à encliquetage selon la revendication 1 ou 2, qui comprend un ressort (102), au moyen duquel le curseur (100) est susceptible d'être mis sous précontrainte.

4. Fermeture à encliquetage selon la revendication 3, qui inclut un second curseur (100) et un cadre (101), dans laquelle le curseur, le second curseur (100) et le ressort (102) sont agencés dans le cadre (101) d'une manière telle que le curseur et le second curseur (100) sont déplaçables en direction opposée en éloignement l'un de l'autre au moyen du ressort (102).

5. Fermeture à encliquetage selon la revendication 4, dans laquelle le curseur et le second curseur (100) sont agencés de telle façon que la pointe en forme triangulaire du curseur et la pointe en forme triangulaire du second curseur (100) dépassent hors du cadre (101) en directions opposées.

6. Fermeture à encliquetage selon la revendication 4 ou 5, dans laquelle le curseur et le second curseur (100) comprennent chacun au moins un élément de butée (1000), qui sont agencés de telle façon que le curseur et le second curseur (100) sont assurés à l'encontre d'un déplacement hors du cadre (101).

7. Dispositif de fixation, qui comprend une première unité de montage (1) avec au moins une fermeture à encliquetage (10) selon l'une des revendications 1 à 6, et une seconde unité de montage (2) avec au moins une partie qui englobe la pièce antagoniste (2000), dans lequel la fermeture à encliquetage (10) est agencée sur la première unité de montage (1), et la partie qui englobe la pièce antagoniste est agencée sur la seconde unité de montage (2) d'une manière telle que la première unité de montage (1) est susceptible d'être fixée sur la seconde unité de montage (2) dans plusieurs positions.

8. Dispositif de fixation selon la revendication 7, dans lequel la première unité de montage (1) comprend deux fermetures à encliquetage (10) agencées sensiblement parallèlement l'une à l'autre, et la seconde unité de montage (2) comprend quatre parties avec chacune une pièce antagoniste (2000), de sorte que la première unité de montage (1) est susceptible d'être fixée sur la seconde unité de montage (2) en quatre positions tournées d'environ 90° les unes par rapport aux autres.

9. Unité de commutation comprenant une fermeture à encliquetage (10) selon l'une des revendications 1 à 6.

10. Appareil à installer en intérieur comprenant une fermeture à encliquetage (10) selon l'une des revendications 1 à 6.
